# EUROPEAN PATENT APPLICATION

(11) **EP 4 282 920 A1**
(43) Date of publication of application: **29.11.2023**
(21) Application number: 22742217.7
(22) Date of filing: 20.01.2022
(51) Int. Cl.: C08L 77/06, C08G 69/28, C08K 3/22, C08K 5/3492

(54) **FLAME-RETARDANT POLYAMIDE GLASS FIBER COMPOSITION AND PREPARATION METHOD THEREFOR**

(30) Priority: 25.01.2021 CN 202110097373
(71) Applicant: Cathay Biotech Inc., Shanghai 201203 (CN); Cibt America Inc., Newark DE 19713 (US); Shanxi Synthetic Biology Institute Co., Ltd., Taiyuan, Shanxi 030001 (CN); Cathay (Taiyuan) Biomaterial Co., Ltd., Taiyuan, Shanxi 030199 (CN)
(72) Inventor: LI, Yuanping, Shanghai 201203 (CN); GUAN, Bing, Shanghai 201203 (CN); LIU, Xiucai, Shanghai 201203 (CN)
(74) Representative: Høiberg P/S
(86) International application number: PCT/CN2022/072934
(87) International publication number: WO 2022/156738

(57) **Abstract**

Provided are a flame-retardant polyamide glass fiber composition and a preparation method therefor. The flame-retardant polyamide glass fiber composition includes, in parts by weight: 40-65 parts of a polyamide resin, 25-40 parts of glass fibers, 0-20 parts of a flame retardant, 0.2-1 part of an antioxidant, and 0.1-2 parts of other auxiliaries. The flame-retardant polyamide glass fiber composition provided in the present invention not only has a bio-based source, but also has a flame-retardant of V-0 in UL94 and excellent mechanical properties, and can be widely applied to the fields of various engineering plastics with high requirements for flame retardant effect and dimensional stability.

## Description

### Technical Field

The present invention relates to the field of engineering plastic technology, and specifically to a flame-retardant polyamide glass fiber composition and a preparation method therefor.

### Background

Polyamide (PA) has excellent comprehensive performance of wear resistance, self-lubrication, easy processing, solvent resistance, high mechanical strength, etc., and higher specific strength than a metal. Polyamides commonly used in engineering plastics are polyamide 6 and polyamide 66, although they have certain flame-retardant, and still cannot meet the requirements of modern people's life and industrial development for flame-retardant property. Modifications are often needed to improve flame-retardant, but adding excessive flame retardants can affect the mechanical properties of polyamides. Thus, a polyamide composite material with high flame-retardant and good mechanical properties and a preparation method thereof are urgently needed in the field.

### Summary

One embodiment of the invention provides a flame-retardant polyamide glass fiber composition. The flame-retardant polyamide glass fiber composition comprises comprising 40-65 parts by mass of a polyamide resin, 25-40 parts by mass of glass fibers, 0-20 parts by mass of a flame retardant, 0.2-1 part by mass of an antioxidant and 0.1-2 parts by mass of other auxiliaries.

Raw materials prepared the polyamide resin comprise pentanediamine and a diacid, the diacid comprises an aliphatic diacid and an aromatic diacid. The aliphatic diacid comprises one or more of succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, heptadecanedioic acid, and octadecanedioic acid. The aromatic diacid comprises one or more of terephthalic acid, isophthalic acid, and phthalic acid.

The molar ratio of pentanediamine to the diacid is 1-1.05: 1.

One embodiment of the invention also provides a preparation method of the flame-retardant polyamide glass fiber composition. The preparation method comprises the following steps of: mixing the polyamide resin, the glass fibers, the flame retardant, the antioxidant and other auxiliaries, preferably kneading by a melt extruder, and more preferably kneading by a twin-screw extruder.

Preferably, the preparation method comprises: adding the polyamide resin, the flame retardant, the antioxidant and other auxiliaries into the stirrer, and mixing to obtain a premix, then melt-mixing the premix at 15-40°C higher than the melting point of the polyamide resin, and adding the glass fibers into the premix, mixing, extruding and cooling to obtain the flame-retardant polyamide glass fiber composition.

The flame-retardant polyamide glass fiber composition provided by the invention has a tensile strength of 170-220 MPa, and/or a bending strength of 200-280 MPa, and/or a bending modulus of 6500-11,000 MPa, and/or a notched impact strength of 6.5-13 J/m², and/or, a flame-retardant property of UL94 up to V-0 grade, a limiting oxygen index of 26.5% (V/V) or more, and/or a heat deformation temperature of 190-250°C.

The flame-retardant polyamide glass fiber composition disclosed by the embodiment of the invention not only has a bio-based source, but also has the flame-retardant property of UL94 up to V-0 grade, has excellent mechanical properties, and can be widely applied to the fields of various engineering plastics with higher requirements for flame-retardant effect and dimensional stability.

### DETAIL DESCRIPTION

Typical embodiments that reflect the characteristics and advantages of the present invention will be described in detail in the following description. It should be understood that the present invention can have various variations in different implementation methods, which do not deviate from the scope of the present invention, and the descriptions therein are essentially intended for illustrative purposes rather than limiting the present invention.

The present invention provides a flame-retardant polyamide glass fiber composition, comprising 40-65 parts by mass of a polyamide resin, 25-40 parts by mass of glass fibers, 0-20 parts by mass of a flame retardant, 0.2-1 part by mass of an antioxidant and 0.1-2 parts by mass of other auxiliariesi.

Raw materials prepared for the polyamide resin comprise pentanediamine and a diacid, the diacid comprises an aliphatic diacid and an aromatic diacid. The aliphatic diacid comprises one or more of succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, heptadecanedioic acid, and octadecanedioic acid. The aromatic diacid comprises one or more of terephthalic acid, isophthalic acid, and phthalic acid.

The molar ratio of pentanediamine to the diacid is 1-1.05: 1.

In an embodiment, pentanediamine may be prepared from a bio-based feedstock by fermentation or enzymatic conversion.

In an embodiment, the molar ratio of pentanediamine to the diacid is 1.05: 1.

In an embodiment, the diacids are adipic acid and terephthalic acid, and the molar ratio of adipic acid to terephthalic acid is 1: 0.1-1.5, preferably 1: 0.3-1.3, more preferably 1: 0.4-0.5.

In an embodiment, the relative viscosity of the polyamide resin in 96% concentrated sulfuric acid at 25°C is 2-4, and more preferably 2.5-3.2. The relative viscosity is measured by Ubbelohde viscometer concentrated sulfuric acid method: 0.25+/-0.0002 g of the dried polyamide resin is accurately weighed, and 50 mL of concentrated sulfuric acid (96 wt%) is added to dissolve, and measure and record the flow time t₀ of the concentrated sulfuric acid and a polyamide sample solution flow time t in a 25°C constant temperature water bath. Relative viscosity calculation formula: relative viscosity=t/t₀, wherein t represents the solution flow time and t₀ represents the solvent flow time.

In an embodiment, the polyamide resin has a melting point of 260-278°C, a moisture content of 800 ppm to 2000 ppm, and an amino terminal group content of 45-55 mmol/kg.

In an embodiment, the preparation method of the polyamide resin comprises the following steps of: (1) raising the temperature of a reaction device to 40°C to 80°C, such as 45°C, 50°C, 60°C, 65°C, 70°C, 75°C and the like, and mixing water, pentanediamine and a diacid in an inert gas atmosphere to prepare a polyamide salt solution with a concentration of 30-70 wt%; (2) transferring the aqueous polyamide salt solution into a polymerization device, heating under inert gas atmosphere, increasing the temperature in the kettle to 230-310°C, increasing the pressure in the polymerization device to 0.7-2.5 MPa, and maintaining for 60-180 min; then in 30-120 minutes, exhausting the gas and depressurizing to normal pressure, and at the same time, increasing the temperature in the polymerization device to 260-340°C; evacuating and depressurizing in the polymerization apparatus to-0.02 to-0.08 MPa and maintaining for 30-120 minutes to obtain the polyamide resin.

In an embodiment, the reaction apparatus is a salt-forming kettle and the polymerization apparatus is a polymerization kettle.

In an embodiment, when the aqueous polyamide salt solution is sampled and diluted to a concentration of 10 wt%, the pH is controlled to 7.5-9.0.

In an embodiment, the inert gas comprises nitrogen, argon or helium.

In an embodiment, the concentration of the polyamide salt solution may be 45 wt%, 50 wt%, 55 wt%, 60 wt%, 65 wt%, 70 wt% or 75 wt%.

In an embodiment, the polyamide resin and the glass fiber are in a mass ratio of 49-65: 25-40.

In an embodiment, the glass fibers comprise any one of E-Glass fiber (or called high-quality general type glass fiber), S-Glass fiber (or called high-strength type glass fiber), D-Glass fiber (or called low-density type glass fiber), C-Glass fiber (or called low-performance ordinary type glass fiber), L-Glass fiber (or called radiation-resistant type glass fiber), and M-Glass fiber (or called high-modulus type glass fiber).

In an embodiment, the glass fibers are preferably chopped glass fibers having a length of 3-5 mm.

In an embodiment, the flame retardant is in an amount of 5 to 12 parts.

In an embodiment, the flame retardant comprises one or more of a phosphorus-containing flame retardant, a halogen flame retardant, a nitrogen-based flame retardant and an inorganic flame retardant, and one of synergists such as antimony trioxide, zinc borate and the like.

In an embodiment, the phosphorus-containing flame retardant comprises one or more of aryl monophosphate, aryl bisphosphate, alkyl dimethyl phosphate, triphenyl phosphate, tricresyl phosphate, tri(xylenyl)phosphate, propylbenzene series phosphate, butylbenzene series phosphate, or hypophosphite.

Preferred hypophosphite salt is an organic metal hypophosphite, such as metal methylethylhypophosphite and metal diethylhypophosphite. More preferably, it is aluminum methylethylhypophosphite, aluminum diethylhypophosphite, zinc methylethylhypophosphite and zinc diethylhypophosphite. More preferably, the flame retardant is aluminum hypophosphite, magnesium hypophosphite, calcium hypophosphite and/or zinc hypophosphite, and more preferably, the flame retardant is aluminum hypophosphite, aluminum diethylhypophosphite and/or zinc diethylhypophosphite.

In an embodiment, the halogen flame retardant is selected from one or more of hexabromocyclododecane, decabromodiphenyl ether, octabromodiphenyl ether, tetrabromobisphenol A, bis(tribromophenoxy)ethane, bis(pentabromophenoxy)ethane, tetrabromobisphenol A epoxy resin, tetrabromobisphenol A carbonate, ethylene bis(tetrabromophthaloyl)imide, ethylenebispentabromodiphenyl, tris(tribromophenoxy)triazine, bis(dibromopropyl)tetrabromobisphenol A, bis(dibromopropyl) etrabromobisphenol S, brominated polyphenylene ether, brominated polystyrene, brominated cross-linked aromatic polymer, brominated epoxy resin, brominated phenoxy resin, brominated styrene-maleic anhydride copolymer, tetrabromobisphenol S, tris(tribromoneopentyl)phosphate, polybromotrimethylphenylindane, and tris(dibromopropyl)isocyanurate.

In an embodiment, the nitrogen-based flame retardant comprises, for example, melamine cyanurate, melamine polyphosphate, melamine pyrophosphate, melamine phosphate, bismelamine pyrophosphate, melam polyphosphate, or melem polyphosphate, and preferably has a phosphorus content of 2 or more, and more preferably 10.

In an embodiment, the inorganic flame retardant comprises metal hydroxides such as magnesium hydroxide, calcium hydroxide, calcium aluminate, aluminum hydroxide, etc., zinc borate, zinc phosphate and other zinc salts, etc..

In an embodiment, the flame retardant is a combination of the halogen flame retardant and the phosphorus-containing flame retardant or a combination of the halogen flame retardant and the nitrogen-based flame retardant

In an embodiment, the flame retardant is selected from any two of aluminum diethylhypophosphite, decabromodiphenyl ether, and melamine polyphosphate.

In an embodiment, the flame retardant is a combination of aluminum diethylhypophosphite and decabromodiphenyl ether, and the weight ratio of aluminum diethylhypophosphite to decabromodiphenyl ether is 3 to 5: 1, such as 3: 1, 4: 1 or 5: 1.

In an embodiment, the flame retardant is a combination of melamine polyphosphate and decabromodiphenyl ether in a weight ratio of 4-6: 1.

In an embodiment, the antioxidant is selected from one or more of hindered phenolic antioxidants, hindered amine antioxidants, or phosphite antioxidants.

Preferably, the antioxidant is selected from one or more of commercially available antioxidant 168, antioxidant 1098, antioxidant 1010, and antioxidant S9228.

In an embodiment, the auxiliaries comprise, but are not limited to, one or more of lubricants, colorants, UV absorbers, light stabilizers, antistatic agents, or plasticizers.

The lubricant preferably comprises an internal lubricant montan wax, such as commercially available WAX-E, and/or an external lubricant amide wax (such as commercially available WAX-C), stearate or ethylenebis-stearamide.

In an embodiment, the flame-retardant polyamide glass fiber composition comprises, in parts by weight: 49-64 parts of polyamide resin, 30-40 parts of glass fiber, 8-12 parts of flame retardant, 0.2-0.4 part of antioxidant and 0.3-0.6 part of lubricant, wherein the total weight part of the raw materials is 100 parts by weight.

In a second aspect, the present invention provides a preparation method of the flame-retardant polyamide glass fiber composition as described above, and the preparation method comprises mixing the polyamide resin, the glass fibers, the flame retardant, the antioxidant and the other auxiliaries, preferably kneading by a melt extruder, more preferably kneading by a twin-screw extruder.

In an embodiment, the preparation method comprises: adding the polyamide resin, the flame retardant, the antioxidant and other auxiliaries into a stirrer, and mixing to obtain a premix, melting at 15-40°C higher than the melting point of the polyamide resin, and adding glass fiber into the premix, mixing, extruding and cooling to obtain the flame-retardant polyamide glass fiber composition.

In an embodiment, during melt-kneading, the premix is fed into a parallel twin-screw extruder through a feeder for melt extrusion, and granulation, in which the parallel twin-screw extruder is in eight-zone heating mode, and its technological parameters are as follows: the temperature of the first zone is 250-270°C, the temperature of the second zone is 270-290°C, the temperature of the third zone is 290-320°C, the temperature of the fourth zone is 290-320°C, the temperature of the fifth zone is 290-320°C, the temperature of the sixth zone is 290-320°C, the temperature of the seventh zone is 290-320°C and the temperature of the eighth zone is 290-320°C, in which the direction from the first zone to the eighth zone is the direction from feed inlet to machine head.

In an embodiment, the machine head temperature of the twin-screw extruder is 285-315 °C.

In an embodiment, the twin-screw extruder has a screw rotation speed of 350-500 r/min.

In an embodiment, the main feed rotation speed of the twin-screw extruder is 10-100 r/min, and the side feed rotation speed of the twin-screw extruder is 1-100 r/min.

In an embodiment, the twin-screw extruder has an aspect ratio of 1: (30-50), preferably 1:36.

The present invention also provides a flame-retardant polyamide glass fiber composition, which has a tensile strength of 170-220 MPa.

In an embodiment, the polyamide glass fiber composition has a bending strength of 200 to 280 MPa, preferably 240 to 280 MPa.

In an embodiment, the polyamide glass fiber composition has a bending modulus of 6500-11,000 MPa, preferably 8200-11,000 MPa.

In an embodiment, the polyamide glass fiber composition has a notched impact strength of 6.5 to 13 J/m², Preferably 7.5 to 13 J/m².

In an embodiment, the polyamide glass fiber composition has flame property of UL94 up to V-0 grade, and/or a limiting oxygen index of 26.5% (V/V) or more, preferably 27-33% (V/V).

In an embodiment, the polyamide glass fiber composition has a heat distortion temperature of 190 to 250 °C, preferably 220 to 250 °C.

The present invention also provides a molded article formed with the flame-retardant polyamide glass fiber composition.

The flame-retardant polyamide glass fiber composition of the present invention has excellent moldability and can be processed into molded articles of various shapes by molding methods such as injection molding, blow molding, extrusion, compression molding, drawing, drawing, vacuum molding, and the like.

In an embodiment, the molding method using mould can be various molding methods such as injection molding, extrusion molding, pressure molding, and the like, and particularly, a molding method using an injection molding machine. The injection molding conditions for continuously obtaining a stable molded article are not particularly specified, but for example, the injection time is preferably 0.5-10 seconds, more preferably 2-10 seconds, and the back pressure is preferably 0.1 MPa or more, more preferably 1 MPa or more, still more preferably 2 MPa or more, and most preferably 3 MPa or more.

One embodiment of the present invention also provides an application of the flame-retardant polyamide glass fiber composition, wherein the flame-retardant polyamide glass fiber composition is a raw material of the following elements or molded products: electrical and electronic equipment and automotive parts such as machines, automotive interior trims, household appliances, toys, sports goods, mobile phones, computers, portable computers and the like.

The inventors of the present application blend polyamide resin with glass fiber, the polyamide resin has a bio-based pentadiamine raw material, excellent fireproof and flame-retardant properties and mechanical properties can be achieved without adding or only adding a small amount of flame retardant during blending, so that the flame-retardant plastic can meet the requirements of different plastic products, in particular to products with higher requirements on fireproof and flame-retardant properties and mechanical properties, such as new energy automotive parts, electrical and electronic equipment, intelligent household articles and other application fields.

The flame-retardant polyamide glass fiber composition and its preparation according to one embodiment of the present invention are further described below with reference to specific examples, in which the related tests are as follows:
1) Bending test: the test is carried out according to the standard ISO 178-2010 under a test condition of 2 mm/min. The size of a sample bar is 10 mm * 4 mm * 80 mm.
2) Tensile test: the test is carried out according to the standard ISO 572-2-2012 under a test condition of 5 mm/min.
3) Impact test: the test is a cantilever beam notched impact test according to the standard ISO 180/1A under a test condition of 23°C.
4) Flame-retardant rating test: UL-94 plastic flame-retardant rating includes: V-2, V-1 and V-0. Wherein V-2: the sample is subjected to two 10 s combustion tests, and the flame is extinguished within 60 s; and the dropping of burning matter can be happen; V-1: the sample is subjected to two 10 s combustion tests, and the flame is extinguished within 60 seconds; and no the dropping of burning matter; V-0: the sample is subjected to two 10 s combustion tests, and the flame is extinguished within 30 seconds; and no the dropping of burning matter.
5) Test of limiting oxygen index: limiting oxygen index (LOI) refers to the volume fraction concentration of oxygen at which a polymer can support its combustion in a mixture of oxygen and nitrogen. It can be used for characterizing combustion behavior of material and judging the difficulty of combustion of material when it is contacted with flame. The limit oxygen index can be measured by using combustion candle test, and a polymer rod is combusted downwards under the specific condition. In the present invention, the test method of limit oxygen index can be carried out according to ISO 4589-2.
6) Heat Deformation Temperature (HDT): the test is carried out according to the national standard GB/T 1634.2-2004, the size of the sample is 120mm * 10mm
* 4mm (length * width * thickness), and the applied bending stress is 1.8 MPa.

The raw materials used in the following examples and comparative examples are commercially available unless otherwise specified:
1. Polyamide resin PA56/5T-1: a relative viscosity of 2.62, a melting point of 270°C, a moisture content of 1000ppm, an amino terminal group content of 52mmol/kg. The preparation method of the polyamide resin included as the following steps:
   (1) The temperature in a salt-forming kettle was increased to 65°C, and water, pentanediamine and a diacid (adipic acid and terephthalic acid with a molar ratio of 1: 0.45) were mixed in a nitrogen atmosphere to prepare an aqueous polyamide salt solution with a concentration of 65 wt%; the molar ratio of pentanediamine to the diacid was 1.05: 1;
   (2) the aqueous polyamide salt solution was transferred into a polymerization kettle, and heated under nitrogen atmosphere, the temperature in the kettle was increased to 290°C, and the pressure in the polymerization kettle was increased to 1.5 MPa, maintaining for 100 minutes; then in 80 minutes, the gas was exhausted and the pressure was decreased to normal pressure while the temperature in the polymerization kettle was increased to 310°C; the polymerization kettle was vacuumed to reduce the pressure inside by -0.05Mpa, maintaining for 60 minutes to obtain the described polyamide resin PA56/5T-1.
2. Polyamide resin PA56/5T-2: a relative viscosity of 2.81, a melting point of 278°C, a moisture content of 1600 ppm, an amino terminal group content of 50 mmol/kg. The preparation method of the polyamide resin PA56/5T-2 referred to the above preparation method of the polyamide resin PA56/5T-1, with the difference that the raw material diacids for preparing the polyamide resin were adipic acid and terephthalic acid in a molar ratio of 1: 0.61.
3. E-glass fiber, M-glass fiber and S-glass fiber with a length of 3 mm, all were available from Taishan Glass Fiber Co., Ltd.

### Example 1

The flame-retardant polyamide glass fiber composition was prepared from the following raw materials in parts by weight:
61 parts of polyamide resin PA56/5T-1, 30 parts of 3 mm E-glass fibers, 8 parts of flame retardant aluminum diethylhypophosphite, 0.2 parts of antioxidant 1098, 0.2 parts of antioxidant 168, 0.3 parts of internal lubricant WAX-E, and 0.3 parts of external lubricant WAX-C.

The preparation method of the flame-retardant polyamide glass fiber composition included the following steps of:
(1) adding the polyamide resin, the flame retardant, the antioxidant, the internal lubricant and the external lubricant into a stirrer for mixing to obtain a premix;
(2) melt-mixing the premix at 295 °C, and simultaneously feeding glass fibers into the premix from the side feed of a parallel twin-screw extruder, mixing, extruding and cooling to obtain the flame-retardant polyamide glass fiber composition.

During melt-mixing, the premix was fed into a parallel twin-screw extruder through a feeder for melt extrusion and granulation. Wherein, the parallel twin-screw extruder was in an eight-zone heating mode, and the temperatures of the first zone to the eighth zone (in the direction from feed to machine head) were 260°C, 280°C, 290°C, 290°C, 290°C, 290°C, 290°C, 290°C, 290°C, 290°C in sequence. The temperature of the machine head was 285 °C. The rotation speed of the screw was 400r/min. The rotation speed of main feeding was 20 r/min. The rotation speed of side feeding was 5.2 r/min. The aspect ratio of the twin-screw extruder was 1:36.

### Example 2

The flame-retardant polyamide glass fiber composition was prepared from the following raw materials in parts by weight:
59 parts of polyamide resin PA56/5T-1, 30 parts of 3 mm E-glass fibers, 10 parts of flame retardant aluminum diethylhypophosphite, 0.2 parts of antioxidant 1098, 0.2 parts of antioxidant 168, 0.3 parts of internal lubricant WAX-E, and 0.3 parts external lubricant WAX-C. The preparation method of the composition was the same as the Example 1.

### Example 3

The flame-retardant polyamide glass fiber composition was prepared from the following raw materials in parts by weight:
57 parts of polyamide resin PA56/5T-1, 30 parts of 3 mm E-glass fibers, 12 parts of flame retardant aluminum diethylhypophosphite, 0.2 parts of antioxidant 1098, 0.2 parts of antioxidant 168, 0.3 parts of internal lubricant WAX-E, 0.3 parts of external lubricant WAX-C. The preparation method of the composition was the same as the Example 1.

### Example 4

The flame-retardant polyamide glass fiber composition was prepared from the following raw materials in parts by weight:
64 parts of polyamide resin PA56/5T-1, 25 parts of 3 mm E-glass fibers, 10 parts of flame retardant aluminum diethylhypophosphite, 0.2 parts of antioxidant 1098, 0.2 parts of antioxidant 168, 0.3 parts of internal lubricant WAX-E, and 0.3 parts of external lubricant WAX-C. The preparation method of the composition was the same as the Example 1.

### Example 5

The flame-retardant polyamide glass fiber composition was prepared from the following raw materials in parts by weight:
56 parts of polyamide resin PA56/5T-1, 33 parts of 3 mm E-glass fibers, 10 parts of flame retardant aluminum diethylhypophosphite, 0.2 parts of antioxidant 1098, 0.2 parts of antioxidant 168, 0.3 parts of internal lubricant WAX-E, and 0.3 parts of external lubricant WAX-C. The preparation method of the composition was the same as that of Example 1

### Example 6

The raw materials and preparation method of the flame-retardant polyamide glass fiber composition were the same as those of the Example 1, and the difference was that the polyamide resin was PA56/5T-2.

### Example 7

The flame-retardant polyamide glass fiber composition was prepared from the following raw materials in parts by weight:
49 parts of polyamide resin PA56/5T-1, 40 parts of 3 mm E-glass fibers, 10 parts of flame retardant aluminum diethylhypophosphite, 0.2 parts of antioxidant 1098, 0.2 parts of antioxidant 168, 0.3 parts of internal lubricant WAX-E, 0.3 parts of external lubricant WAX-C. The preparation method of the composition was the same as the Example 1.

### Example 8

The flame-retardant polyamide glass fiber composition was prepared from the following raw materials in parts by weight:
59 parts of polyamide resin PA56/5T-1, 30 parts of 3 mm E-glass fibers, 10 parts of flame retardant melamine aluminum polyphosphate, 0.2 parts of antioxidant 1098, 0.2 parts of antioxidant 168, 0.3 parts of internal lubricant WAX-E, 0.3 parts of external lubricant WAX-C. The preparation method of the composition was the same as the Example 1.

### Example 9

The flame-retardant polyamide glass fiber composition was prepared from the following raw materials in parts by weight:
59 parts of polyamide resin PA56/5T-1, 30 parts of 3 mm E-glass fibers, 10 parts of flame retardant decabromodiphenyl oxide, 0.2 parts of antioxidant 1098, 0.2 parts of antioxidant 168, 0.3 parts of internal lubricant WAX-E, and 0.3 parts of external lubricant WAX-C. The preparation method of the composition was the same as the Example 1.

### Example 10

The flame-retardant polyamide glass fiber composition was prepared from the following raw materials in parts by weight: 59 parts of polyamide resin PA56/5T-1, 30 parts of 3 mm E-glass fibers, 8 parts of flame retardant aluminum diethylhypophosphite, 2 parts of flame retardant decabromodiphenyl oxide, 0.2 parts of antioxidant 1098, 0.2 parts of antioxidant 168, 0.3 parts of internal lubricant WAX-E and 0.3 parts of external lubricant WAX-C. The preparation method of the composition was the same as that of the Example 1.

### Example 11

The flame-retardant polyamide glass fiber composition was prepared from the following raw materials in parts by weight: 59 parts of polyamide resin PA56/5T-1, 30 parts of 3 mm E-glass fibers, 8 parts of flame retardant melamine aluminum polyphosphate, 2 parts of flame retardant decabromodiphenyl oxide, 0.2 parts of antioxidant 1098, 0.2 parts of antioxidant 168, 0.3 parts of internal lubricant WAX-E and 0.3 parts of external lubricant WAX-C. The preparation method of the composition was the same as that of the Example 1.

### Example 12

The flame-retardant polyamide glass fiber composition was prepared from the following raw materials in parts by weight: 59 parts of polyamide resin PA56/5T-1, 30 parts of 3 mm S-glass fibers, 8 parts of flame retardant aluminum diethylhypophosphite, 2 parts of flame retardant decabromodiphenyl oxide, 0.2 parts of antioxidant 1098, 0.2 parts of antioxidant 168, 0.3 parts of internal lubricant WAX-E and 0.3 parts of external lubricant WAX-C. The preparation method of the composition was the same as that of the Example 1.

### Example 13

The flame-retardant polyamide glass fiber composition was prepared from the following raw materials in parts by weight: 59 parts of polyamide resin PA56/5T-1, 30 parts of 3 mm M-glass fibers, 8 parts of flame retardant aluminum diethylhypophosphite, 2 parts of flame retardant decabromodiphenyl oxide, 0.2 parts of antioxidant 1098, 0.2 parts of antioxidant 168, 0.3 parts of internal lubricant WAX-E and 0.3 parts of external lubricant WAX-C. The preparation method of the composition was the same as that of the Example 1.

### Example 14

The flame-retardant polyamide glass fiber composition was prepared from the following raw materials in parts by weight: 59 parts of polyamide resin PA56/5T-1, 30 parts of 3 mm E-glass fibers, 5 parts of flame retardant aluminum diethylhypophosphite, 5 parts of flame retardant decabromodiphenyl oxide, 0.2 parts of antioxidant 1098, 0.2 parts of antioxidant 168, 0.3 parts of internal lubricant WAX-E and 0.3 parts of external lubricant WAX-C. The preparation method of the composition was the same as that of the Example 1.

### Example 15

The flame-retardant polyamide glass fiber composition was prepared from the following raw materials in parts by weight: 59 parts of polyamide resin PA56/5T-1, 30 parts of 3 mm E-glass fibers, 2 parts of flame retardant aluminum diethyl hypophosphite, 8 parts of flame retardant decabromodiphenyl oxide, 0.2 parts of antioxidant 1098, 0.2 parts of antioxidant 168, 0.3 parts of internal lubricant WAX-E and 0.3 parts of external lubricant WAX-C. The preparation method of the composition was the same as that of the Example 1.

### Example 16

The polyamide resin composition was prepared from the following raw materials in parts by weight: 59 parts of polyamide resin PA56/5T-1, 30 parts of 3mm E-glass fibers, 8 parts of flame retardant aluminum hydroxide, 0.2 parts of antioxidant 1098, 0.2 parts of antioxidant 168, 0.3 parts of internal lubricant WAX-E and 0.3 parts of external lubricant WAX-C

The polyamide resin composition preparation method included the steps of:
(1) adding the polyamide resin, a flame retardant, the antioxidant, the internal lubricant and the external lubricant into a stirrer for mixing to obtain a premix;
(2) melt-kneading the premix at a temperature of 290°C, and simultaneously feeding glass fibers from a side feed to the premix, mixing, extruding and cooling to obtain the resin composition.

During melt-mixing, the premix was fed into a parallel twin-screw extruder through a feeder for melt extrusion and granulation. Wherein, the twin-screw extruder was in an eight-zone heating mode, and the temperatures in the first zone to the eighth zone (in the direction from feed to machine head) were 260 °C, 280°C, 290°C, 290°C, 290°C, 290°C, 290°C, 290°C, 290°C, and 290°C in sequence. The temperature of the machine head was 285 °C. The rotation speed of the screw was 400r/min. The rotation speed of main feeding was 20 r/min. The rotation speed of side feeding was 5.2 r/min. The aspect ratio of the twin-screw extruder was 1:36.

### Comparative example 1

A polyamide resin composition was prepared from the following raw materials (containing no glass fiber) in parts by weight:
89 parts of polyamide resin PA56/5T-1, 10 parts of flame retardant aluminum diethylhypophosphite, 0.2 parts of antioxidant 1098, 0.2 parts of antioxidant 168, 0.3 parts of internal lubricant WAX-E, and 0.3 parts of external lubricant WAX-C.

The polyamide resin composition preparation method included the steps of:
(1) adding the polyamide resin, flame retardant, antioxidant, internal lubricant and external lubricant into a stirrer for mixing to obtain a premix;
(2) melt-kneading, mixing, extruding and cooling the premix at a temperature of 290 °C to obtain the resin composition.

During melt-mixing, the premix was fed into a parallel twin-screw extruder through a feeder for melt extrusion and granulation. Wherein, the twin-screw extruder was in an eight-zone heating mode, and the temperatures of the first zone to the eighth zone (in the direction from feed to machine head) were 260 °C, 280°C, 290°C, 290°C, 290°C, 290°C, 290°C, 290°C, 290°C, and 290°C in sequence. The temperature of the machine head was 285 °C. The rotation speed of the screw was 400 r/min. The rotation speed of main feeding was 20r/min. The rotation speed of side feeding was 5.2 r/min. The aspect ratio of the twin-screw extruder was 1:36.

### Comparative example 2

The polyamide glass fiber composition was prepared from the following raw materials in parts by weight: 69 parts of polyamide resin PA56/5T-1, 20 parts of 3 mm E-glass fibers, 10 parts of flame retardant aluminum diethylhypophosphite, 0.2 parts of antioxidant 1098, 0.2 parst of antioxidant 168, 0.3 parts of internal lubricant WAX-E and 0.3 parts of external lubricant WAX-C. The preparation method of the composition was the same as that of the Example 1.

Performance tests were performed on the resin compositions obtained in the above examples and comparative examples, and the data obtained are shown in Table 1.

**Table 1**

| Test Item | Tensile strength (MPa) | Bending strength (MPa) | Bending modulus (MPa) | Notched impact strength (J/m²) | Flame-retardant property (1.5mm) | Limiting oxygen index (%) | Heat deformation (180MPa/°C) |
|---|---|---|---|---|---|---|---|
| Example 1 | 185 | 259 | 8711 | 8.4 | V-0 | 26.9 | 234 |
| Example2 | 184 | 258 | 8832 | 9.3 | V-0 | 29.6 | 235 |
| Example3 | 182 | 256 | 8647 | 8.2 | V-0 | 32.2 | 232 |
| Example4 | 165 | 203 | 6591 | 6.7 | V-0 | 29.5 | 194 |
| Example5 | 197 | 269 | 9573 | 10.8 | V-0 | 28.7 | 241 |
| Example6 | 175 | 251 | 8342 | 7.8 | V-0 | 29.2 | 226 |
| Example7 | 215 | 275 | 10152 | 12.5 | V-0 | 29.1 | 247 |
| Example8 | 183 | 255 | 8629 | 8.6 | V-0 | 28.5 | 233 |
| Example9 | 184 | 257 | 8816 | 8.4 | V-0 | 29.5 | 235 |
| Example 10 | 197 | 262 | 8892 | 8.7 | V-0 | 31.3 | 237 |
| Example 11 | 183 | 254 | 8289 | 8.1 | V-0 | 29.4 | 231 |
| Example 12 | 189 | 256 | 8625 | 8.3 | V-0 | 30.9 | 234 |
| Example 13 | 185 | 257 | 9139 | 8.5 | V-0 | 30.8 | 235 |
| Example 14 | 181 | 247 | 8479 | 8.0 | V-0 | 29.6 | 232 |
| Example 15 | 182 | 249 | 8527 | 8.1 | V-0 | 29.7 | 233 |
| Example 16 | 173 | 246 | 8273 | 7.5 | V-0 | 27.6 | 221 |
| Comparative Example 1 | 76 | 113 | 2985 | 5.2 | V-1 | 28.9 | 84 |
| Comparative Example 2 | 144 | 185 | 4961 | 6.2 | V-0 | 29.4 | 173 |

It can be seen from can be seen from the results of Table 1 that by co-mixing polyamide resin containing bio-base raw material (pentanediamine) and glass fiber, the flame-retardant polyamide glass fiber composition can be obtained, whose fire-retardant property can be up to V-0 grade in UL94, and mechanical property is excellent, so that it can be extensively used in the field of various engineering plastics with high requirements for flame-retardant effect and dimensional stability.

Unless otherwise defined, all terms used in the present invention have the meanings commonly understood by those of ordinary skill in the art.

The embodiments described in the present disclosure are only for exemplary purposes and are not intended to limit the protection scope of the present disclosure. Those skilled in the art can make various other substitutions, changes and improvements within the scope of the present disclosure. Therefore, the present disclosure is not limited to the above-described embodiments, but only by the claims.

## Claims

1. A flame-retardant polyamide glass fiber composition comprising 40-65 parts by mass of a polyamide resin, 25-40 parts by mass of glass fibers, 0-20 parts by mass of a flame retardant, 0.2-1 part by mass of an antioxidant and 0.1-2 parts by mass of other auxiliaries;
raw materials prepared the polyamide resin comprise pentanediamine and a diacid; the diacid comprises an aliphatic diacid and an aromatic diacid; the aliphatic diacid comprises one or more of succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, heptadecanedioic acid, and octadecanedioic acid; the aromatic diacid comprises one or more of terephthalic acid, isophthalic acid, and phthalic acid; and
the molar ratio of pentanediamine to the diacid is 1-1.05: 1.

2. The flame-retardant polyamide glass fiber composition according to claim 1, wherein the diacids are adipic acid and terephthalic acid, and the molar ratio of adipic acid to terephthalic acid is 1: 0.1-1.5.

3. The flame-retardant polyamide glass fiber composition according to claim 1, wherein the polyamide resin has a relative viscosity of 2-4 in 96% concentrated sulfuric acid at 25°C; a melting point of 260-278°C, a moisture content of 800 ppm to 2000 ppm, and an amino terminal group content of 45-55 mmol/kg.

4. The flame-retardant polyamide glass fiber composition according to claim 1, wherein the glass fibers are selected from any one of E-Glass fiber, S-Glass fiber, D-Glass fiber, C-Glass fiber, L-Glass fiber, and M-Glass fiber; and/or the glass fibers are chopped glass fibers having a length of 3-5 mm.

5. The flame-retardant polyamide glass fiber composition according to claim 1, wherein the flame retardant is selected from one or more of a phosphorus-containing flame retardant, a halogen flame retardant, a nitrogen-based flame retardant and an inorganic flame retardant.

6. The flame-retardant polyamide glass fiber composition according to claim 1, wherein the flame retardant is selected from any two of aluminum diethylhypophosphite, decabromodiphenyl ether, and melamine polyphosphate.

7. The flame-retardant polyamide glass fiber composition according to claim 1, wherein the antioxidant is selected from one or more of hindered phenolic antioxidants, hindered amine antioxidants, or phosphite antioxidants; and
preferably, the antioxidant is selected from one or more of commercially available antioxidant 168, antioxidant 1098, antioxidant 1010, and antioxidant S9228.

8. The flame-retardant polyamide glass fiber composition according to claim 1, wherein the other auxiliaries comprise one or more of lubricants, colorants, UV absorbers, light stabilizers, antistatic agents, and plasticizers; and
preferably the lubricant comprises an internal lubricant such as montan wax, and an external lubricant such as amide wax, stearate or ethylenebis-stearamide.

9. A preparation method of the flame-retardant polyamide glass fiber composition according to any one of claims 1-8, comprising: mixing the polyamide resin, glass fibers, the flame retardant, the antioxidant and other auxiliaries, preferably kneading by a melt extruder, and more preferably kneading by a twin-screw extruder;
preferably, the preparation method comprises: adding the polyamide resin, the flame retardant, the antioxidant and other auxiliaries into the stirrer, and mixing to obtain a premix, then melt-mixing the premix at 15-40°C higher than the melting point of the polyamide resin, and adding the glass fibers into the premix, mixing, extruding and cooling to obtain the flame-retardant polyamide glass fiber composition.

10. The flame-retardant polyamide glass fiber composition according to any one of claims 1-8, wherein the flame-retardant polyamide glass fiber composition has a tensile strength of 170-220 MPa, and/or a bending strength of 200-280 MPa, and/or a bending modulus of 6500-11,000 MPa, and/or a notched impact strength of 6.5-13 J/m², and/or, a flame-retardant property of UL94 up to V-0 grade, a limiting oxygen index of 26.5% (V/V) or more, and/or a heat deformation temperature of 190-250°C.
